# EUROPEAN PATENT APPLICATION

(11) **EP 2 009 435 A1**
(43) Date of publication of application: **31.12.2008**
(21) Application number: 07111386.4
(22) Date of filing: 29.06.2007
(51) Int. Cl.: G01N 27/407

(54) **Oxygen sensor for an internal combustion engine and method for operating such an oxygen sensor**

(71) Applicant: Ford Global Technologies, LLC, Dearborn, MI 48126 (US)
(72) Inventor: Vigild, Christian Winge, 52457 Aldenhoven (DE); Vantine, Katie, 52062, Aachen (DE); Tumelaire, Charles, 52076, Aachen (DE); Roettger, Daniel, 4731, Eynatten (BE); Karvounis, Evangelos, 52070, Aachen (DE)
(74) Representative: Drömer, Hans-Carsten

(57) **Abstract**

The invention relates to an oxygen sensor (1) for use with an internal combustion engine producing an exhaust gas, which is provided with a protection shield (3) surrounding at least one sensing element being in contact with the exhaust gas.

Furthermore the invention relates to a method for operating such an oxygen sensor (1).

An object of the present invention is to provide such an oxygen sensor (1), which overcomes the problems known in the state of the art, in particular an oxygen sensor (1) which enables highly accurate measurements during engine operation.

An oxygen sensor (1) is provided, which is characterized in that
■ said protection shield (3) is heatable.

## Description

The present invention relates to an oxygen sensor for use with an internal combustion engine producing an exhaust gas, which is provided with a protection shield surrounding at least one sensing element being in contact with the exhaust gas.

Furthermore the invention relates to a method for operating such an oxygen sensor.

According to the state of the art such sensors are used for feedback control of the air-to-fuel ratio, in particular for feedback control of exhaust gas recirculation, for example.

For this a sensor of the above mentioned kind can be placed within the exhaust gas pipe and within the intake manifold downstream of the exhaust gas recirculation (EGR) inlet point, respectively.

Emissions, in particular NOₓ-emissions for internal combustion engines, can be reduced by lowering the combustion temperature. One possibility to achieve low combustion temperatures is to add exhaust gas to the combustion fresh air by feeding back exhaust gas into the intake manifold.

Furthermore internal combustion engines are provided with various types of aftertreatment devices for purifying exhaust gas generated by the combustion and emitted from combustion chambers into the exhaust pipe. For example, particulate filters to filter and trap the soot particulates contained in the exhaust gas.

For reducing nitrogen oxides (NOₓ) emissions of an internal combustion engine a NOₓ storage catalyst could be installed in the exhaust pipe. Such a catalyst is also known as NOₓ trap or lean NOₓ trap (abbreviated LNT - Lean NOₓ Trap).

To control such aftertreatment devices an oxygen sensor may be utilized.

US 5 531 879 discloses a sensor of the above mentioned kind, i.e., a sensor according to the preamble of claim 1. Using such a sensor several problems are arising.

One of these problems is the contamination of the sensor derived from soot particulates and other components contained in the exhaust gas. Thereby a deposit is build up on the outer surface of said sensor, in particular on said protection shield and said at least one electrode. Depending on the level of contamination said contamination effect ranges from increased sensor response time to complete sensor failure. In addition, the contamination results in a deteriorated measurement accuracy and/or accelerated ageing.

Furthermore the time period required for said sensor to reach light-off-temperature and the time required to reach dew-point-temperature is considerable longer, during which closed loop control, i.e., feedback control based on said oxygen sensor is not possible.

The application of said oxygen sensors is expected to play a major role as an enabler for new combustion and aftertreatment technologies, especially when installed in the intake manifold, which will be necessary to meet future emission requirements. This could be hindered by a lack of suitable sensors which combine accuracy and durability at low cost.

Hence sensors enabling a more accurate measurement are generally required.

With respect to the above mentioned it is an object of the present invention to provide an oxygen sensor according to the preamble of claim 1, which overcomes the above described problems, in particular an oxygen sensor which enables highly accurate measurements during engine operation.

Another object of the present invention is to provide a method for operating such an oxygen sensor.

The first object is achieved by an oxygen sensor for use with an internal combustion engine producing an exhaust gas, which is provided with a protection shield surrounding at least one sensing element being in contact with the exhaust gas, whereby said sensor is characterized in that said protection shield is heatable.

The inventive sensor is provided with a heatable protection shield. This provides the ability to burn off possible contamination deposits like soot deposits on the oxygen sensor.

As known from internal combustion engines equipped with a particulate filter to filter and trapped the soot particulates contained in the exhaust gas within a regeneration phase the particulate filter is regenerated and the trapped particulates are burned by increasing the exhaust gas temperature.

Instead of increasing the exhaust gas temperature according to the present invention the shield protection of the inventive sensor can be heated to increase the shield temperature in order to burn off the deposits. Additives could be added to the exhaust gas for promoting the combustion of the deposits.

In scenarios where the sensor is installed in the intake manifold downstream of the EGR inlet point, hence the gaseous matter surrounding the sensor is mixture of fresh air and exhaust gas, an active heating of the protection tube is mandatory to remove and/or dry out the soot contamination accumulated on the sensor, since the temperature of the gaseous matter alone will not reach a level providing for combustion nor evaporation of the mentioned contamination.

By heating the shield a purifying process is initiated and deposits on said sensor generated by the combustion and resulting in a deterioration of the measurement accuracy may be burnt off.

Furthermore, less time is required to reach sensor's light-off-temperature. This provides a better engine emission control during the engine warm-up phase after a cold-start.

In addition to this the problems with sensor cracking due to water impingement are minimized.

Preferred embodiments of said oxygen sensor are specified in the dependent claims and are described in the following. Further advantages and features of the invention will become apparent from the following description of preferred embodiments of the invention.

The object concerning the method is achieved by a method which is characterized in that said protection shield is heated in order to increase the shield temperature.

According to a preferred embodiment of the inventive sensor said protection shield is formed as protection tube. Due to this manufacturing is simplified. A pipe section can be used as protection shield.

In a preferred embodiment, said protection tube has a cylindrical form and/or is arranged concentric around the axis of said sensor. Access to the at least one sensing element of the sensor is provided for through one or more openings in the protection tube. At least one sensing element is installed inside said protection shield which must be in contact with the gaseous medium of interest, namely exhaust gas or a mixture of exhaust gas and fresh air. Although the shield has the function to protect the sensor, access to the at least one sensing element is granted through openings in the protection tube.

According to a preferred embodiment of the inventive sensor said protection shield is provided with at least one passage enabling the exhaust gas to pass through said shield. The at least one electrode disposed inside said protection shield has to be in contact with the exhaust gas. Although the shield has the function to protect the sensor, a possibility must be created to allow the exhaust gas to get in touch with the electrode.

In a preferred embodiment, said at least one passage is formed as a hole or a slit. Said hole can be produced by drilling, for example.

According to a preferred embodiment of the inventive sensor said protection shield comprises a heatable filter installed within said at least one passage. The components, in particular the soot particulates, contained in the exhaust gas are trapped by the filter when passing through said at least one passage and filter, respectively.

Instead of heating the whole protection shield it is much more energy-saving just to heat the filter, which has a lower mass and surface than that of the shield. According to the present invention the filter is a component of the shield. So, if the shield is provided with a heatable filter, the shield could be considered as a heatable shield.

In accordance with the preceding paragraphs it is preferred that said sensor is heated during the warm-up phase of the internal combustion engine and or said sensor is heated to burn off deposits built up on the surface of said protection shield during engine operation.

The operation of the heating functionality of the sensor shield may be activated periodically for reasons of energy saving - e.g. fuel consumption - and/or heater durability. The time between shield heating activations is a trade-off between sensor measurement accuracy and energy management and/or heater durability.

The present invention will now be described, by way of example, with reference to the accompanying drawings, in which
- Fig. 1: shows schematically an external view of a first embodiment of the inventive sensor arranged in an exhaust pipe of an internal combustion engine,
- Fig. 2a: shows schematically an external view of the protection shield of a second embodiment of the inventive sensor, and
- Fig. 2b: shows schematically a cut-through view of the protection shield of said second embodiment of the inventive sensor.

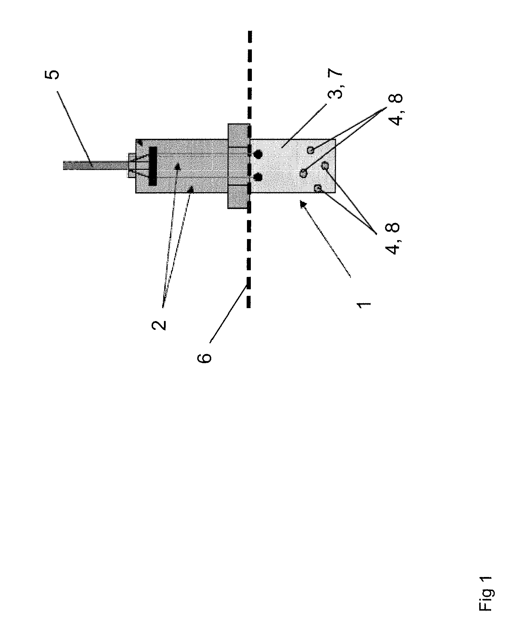

Figure 1 shows as schematic illustration an embodiment of the inventive sensor 1 arranged in an exhaust pipe 6 of an internal combustion engine.

The oxygen sensor 1 is provided with a heatable protection shield 3 surrounding at least one sensing element (not shown).

According to the illustrated embodiment said protection shield 3 is formed as protection tube 7. As can be seen in figure 1 said protection tube 7 is provided with holes 8 served as passages 4 enabling the gaseous matter to pass through said shield 3 and ensuring that the inside said protection shield 3 installed sensing element has contact with the gaseous matter. The protection tube 7 is arranged close to the wall 6 of the exhaust pipe 6 (dashed line).

To create a heating the protection shield 3 is connected with electrical wires 2, which are provided with energy via a connection 5.

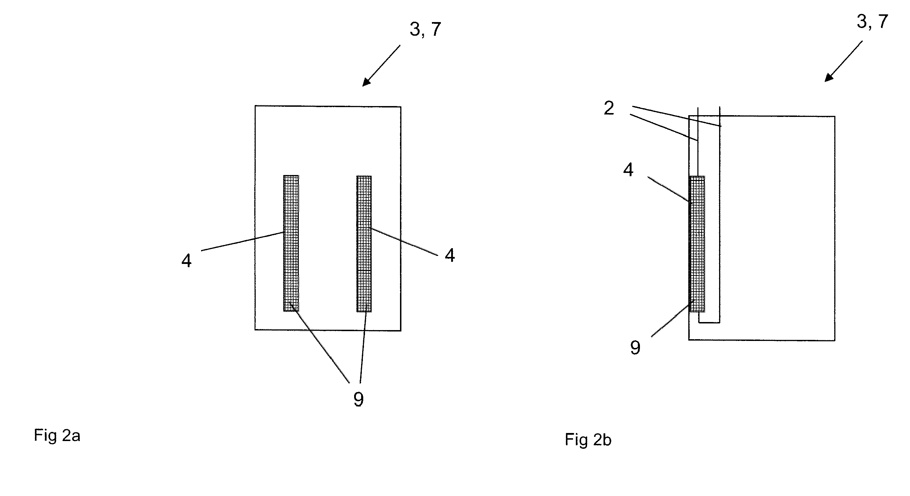

Figure 2a shows schematically an external view of the protection shield 3 of a second embodiment of the inventive sensor. Figure 2b shows a cut-through view of said protection shield 3.

As can be seen said protection shield 3 is formed as protection tube 7, which comprises a heatable filter 9 installed within passages 4.

Instead of heating the protection shield 3 the filter 9 is equipped with a heating functionality. For this the filter 9 is connected with an energy source via electrical wires 2.

### Reference numerals

- 1: oxygen sensor
- 2: electrical wire
- 3: protection shield
- 4: passage
- 5: connection
- 6: exhaust pipe, wall
- 7: protection tube
- 8: hole
- 9: filter

## Claims

1. Oxygen sensor (1) for use with an internal combustion engine producing an exhaust gas, which is provided with a protection shield (3) surrounding at least one sensing element being in contact with the exhaust gas,
**characterized in that**
said protection shield (3) is heatable.

2. Oxygen sensor according to claim 1,
**characterized in that**
said protection shield (3) is formed as protection tube (7).

3. Oxygen sensor according to claim 2,
**characterized in that**
said protection tube (7) is arranged concentric around the axis of said sensor (1).

4. Oxygen sensor according to any of the preceding claims,
**characterized in that**
said protection shield (3) is provided with at least one passage (4) enabling the exhaust gas to pass through said shield (3).

5. Oxygen sensor according to claim 4,
**characterized in that**
said passage (4) is formed as a hole (8).

6. Oxygen sensor according to claim 4 or 5,
**characterized in that**
said protection shield (3) comprises a heatable filter (9) installed within said at least one passage (4).

7. Method for operating an oxygen sensor (1) according to any of the preceding claims,
**characterized in that**
said protection shield (3) is heated in order to increase the shield temperature.

8. Method according to claim 7,
**characterized in that**
said sensor is heated during the warm-up phase of the internal combustion engine.

9. Method according to claim 6 or 7,
**characterized in that**
said sensor is heated to burn off deposits built up on the surface of said protection shield (3) during engine operation.

## Amended claims

### Amended claims in accordance with Rule 137(2) EPC.

**1.** Method for operating an oxygen sensor (1) for use with an internal combustion engine producing an exhaust gas, which is provided with a heatable protection shield (3) surrounding at least one sensing element being in contact with the exhaust gas, in which said protection shield (3) is heated in order to increase the shield temperature,
**characterized in that**
said protection shield (3) is heated to burn off deposits built up on the surface of said protection shield (3) during engine operation.

**2.** Method according to claim 1,
**characterized in that**
said protection shield (3) is formed as protection tube (7).

**3.** Method according to claim 2,
**characterized in that**
said protection tube (7) is arranged concentric around the axis of said sensor (1).

**4.** Method according to any of the preceding claims,
**characterized in that**
said protection shield (3) is provided with at least one passage (4) enabling the exhaust gas to pass through said shield (3).

**5.** Method according to claim 4,
**characterized in that**
said passage (4) is formed as a hole (8).

**6.** Method according to claim 4 or 5,
**characterized in that**
said protection shield (3) comprises a heatable filter (9) installed within said at least one passage (4).

**7.** Method according to any of the preceding claims,
**characterized in that**
said sensor is heated during the warm-up phase of the internal combustion engine.
